# EUROPEAN PATENT APPLICATION

(11) **EP 0 854 462 A2**
(43) Date of publication of application: **22.07.1998**
(21) Application number: 97309364.4
(22) Date of filing: 20.11.1997
(51) Int. Cl.: G07F 19/00, G06F 17/60

(54) **An electronic trading method**

(30) Priority: 21.11.1996 JP 310381/96
(71) Applicant: Hitachi, Ltd., Chiyoda-ku, Tokyo 101-0062 (JP)
(72) Inventor: Teramura, Takeshi, Yokohama-shi (JP); Hiroya, Masaaki, Yokohama-shi (JP); Ito, Atsushi, Tokyo (JP)
(74) Representative: Hackney, Nigel John

(57) **Abstract**

An electronic trading method prevents unjust trading relative to prices or goods in an electronic trading using valuable data such as electronic money as settlement means. A broker server (30) which temporarily stores electronic money, for example, is connected to a communication network. When electronic money is sent as a price of goods from a terminal (10) of a goods consumer to a server (20) of a goods merchant, the sending of electronic money is performed in two steps including sending of electronic money from the terminal (10) of the consumer to the broker server (30) and sending of electronic money from the broker server to the server (20) of the merchant. The sending of electronic money from the broker server (30) to the server (20) of the merchant is performed when a predetermined settlement condition including a condition relative to the elapse of a designated date or reception of a receipt issued by the terminal (10) of the consumer is brought into existence. When the consumer does not receive goods although a predetermined delivery date of goods has elapsed, the terminal (10) of the consumer transmits a command for prohibiting settlement to the broker server (30). When the broker server (30) receives the command, the broker server (30) does not sent electronic money to the server (20) of the merchant even if the settlement condition is brought into existence.

## Description

The present invention relates to trading or transactions on a communication network and more particularly to a system capable of effecting commercial transactions using valuable data.

As the infrastructure of the information (communication) network represented by the internet is provided gradually completely, a so-called electronic trading for effecting commercial transactions on such a communication network is already put to practical use partially. The electronic trading is featured in that all or part of the following four steps for usual trading including (1) retrieval of goods or item merchant and goods or item, (2) ordering of the goods, (3) delivery of the goods and (4) settlement are performed on the network. As compared with the existing trading system, the electronic trading has advantages including wide selection of trading parties regardless of distance, high-speed trading through the network and easy trading management by electronic trading.

One of problems of the electronic trading is related to settlement means performed on the network. In the conventional trading, money is directly paid between men. The technique that such a settlement method is realized on the network is desired. As the settlement technique in the electronic trading, electronic money and electronic checks are promising.

The electronic money is "electronic data" having the same worth as cash. In a system using the electronic money, electronic money information is stored in an exclusive IC card and electronic information is transmitted and received between two IC cards by means of exclusive terminals or apparatuses to thereby attain movement of the worth. This technique is known in the International Publication WO91/16691. In this example, the IC cards are directly authenticated each other upon movement of the electronic money. Particularly, application to small settlement or transactions capable of guarding the privacy and utilization by the younger generation are promising due to the characteristics of the electronic money including small fee upon settlement, anonymity and unnecessary supply of credit to the user.

Similarly, the electronic checks are electronic data having the same worth as ordinary checks. Electronic checks of the Financial Services Technology Consortium (FSTC) of the United State are known as an example thereof (http://www.fstc.org/index. html). In this example, a target is set to substitute the ordinary checks of paper by electronic data completely and a technique using an IC card to make an electronic signature is used.

Data having the worth of money such as the electronic money and the electronic checks is hereinafter named "valuable data" generically.

In the electronic trading using the valuable data as payment means, however, a method in which the valuable data is simply used to perform settlement has the possibility that unjust transactions such as stealing of valuable data and goods by a goods consumer or purchaser or a goods merchant are performed. A method in which a consumer pays valuable data to a merchant through a network after mutual agreement on commercial transactions and the consumer then receives goods through a delivery system or the network has the possibility that there appears an evil-minded merchant who does not deliver the goods regardless of reception of the valuable data. On the contrary, a method in which valuable data is paid after a consumer has received goods has the possibility that there appears an evil-minded consumer who does not pay the valuable data regardless of reception of the goods.

In the latter case, it is considered that reception of payment is entrusted to a deliverer. That is, payment of the price is not made electronically by means of the network but the consumer pays the price to the deliverer upon reception of the goods. However, such a method has problems that this method cannot be applied to electronic goods such as softwares which are sent through the network, it takes time to reach a final settlement as compared with the electronic settlement, and management of the price requires much labor.

Preferably, it is an object of the present invention to provide an electronic trading method which prevents unjust transactions of prices or goods in the electronic trading using valuable data as settlement means.

In a first aspect, the present invention provides the following electronic trading method in the electronic trading system in which a plurality of information processing apparatuses including means for storing valuable data are connected to one another through a communication network.

A first information processing apparatus for requiring purchase of goods comprises sending an identifier of a second information processing apparatus for providing at least goods and valuable data to a third information processing apparatus for mediating goods and valuable data, waiting for reception of data of goods corresponding to the valuable data from the second information processing apparatus, transmitting receipt data of goods to the second information processing apparatus when the data of goods is received, and transmitting a command for prohibiting settlement to the third information processing apparatus when the data of goods is not received although a predetermined date has elapsed.

The third information processing apparatus comprises receiving at least valuable data and the identifier of the second information processing apparatus from the first information processing apparatus, transmitting at least an amount of the valuable data and an identifier of the first information processing apparatus to the second information processing apparatus, performing settlement relative to the valuable data when a predetermined settlement condition is brought into existence, and preventing execution of the settlement when the command for prohibiting the settlement is received from the first information processing apparatus before the settlement condition is brought into existence.

The second information processing apparatus comprises receiving at least the amount of the valuable data and the identifier of the first information processing apparatus from the third information processing apparatus, transmitting data of goods to the first information processing apparatus, and receiving receipt data of goods from the first information processing apparatus.

The second information processing apparatus may receive the price (valuable data) after reception of the receipt or a fourth information processing apparatus may receive the price instead of the second information processing apparatus. However, when the fourth information processing apparatus receives the price, means for causing the ordering data of the second information processing apparatus to the price received by the fourth information processing apparatus is provided.

### BRIEF DESCRIPTION OF THE DRAWINGS

Fig. 1 is a schematic diagram illustrating a system of the present invention;
Figs. 2A to 2C show contents of data used in each information processing apparatus;
Fig. 3 shows a list of communication messages transmitted and received between the information processing apparatuses;
Fig. 4 is a detailed flow chart showing processing in a consumer terminal of the present
invention; Fig. 5 is a detailed flow chart showing processing in a broker server of the present invention;
Fig. 6 is a detailed flow chart showing claim processing 6009 of a consumer; and
Fig. 7 is a detailed flow chart showing processing in a merchant server of the present invention.

### DESCRIPTION OF THE PREFERRED EMBODIMENT

An embodiment of the present invention is now described. In the embodiment, goods or items are limited to electronic articles and electronic money is used as an example. Trading or transactions processed by information processing apparatuses are described by way of example. Further, in the embodiment, a term of the information processing apparatuses is used as a general term of servers and terminals.

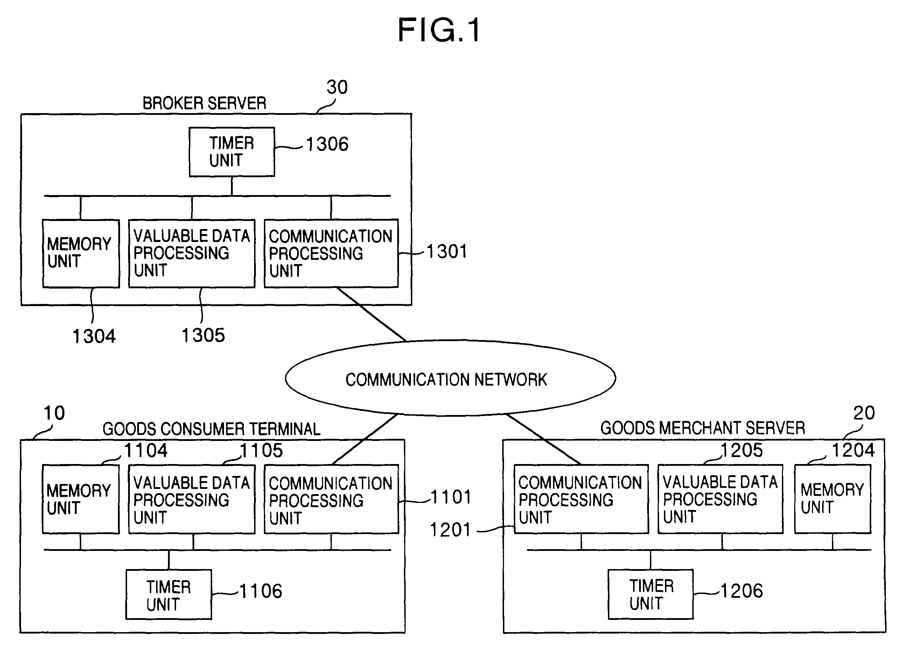

Fig. 1 is a block diagram schematically illustrating an electronic trading system including a terminal 10 of a consumer (hereinafter referred to as a consumer terminal), a server 20 of a merchant (hereinafter referred to as a merchant server) and a server 30 of a broker (hereinafter referred to as a broker server) which constitute information processing apparatuses according to the present invention and the internal configuration and the mutual relation of the respective information processing apparatuses. Fig. 1 illustrates only three information processing apparatuses which are a minimum unit constituting the electronic trading system of the embodiment, while the electronic trading system includes a large number of apparatuses actually. The broker server is sufficiently reliable and does not depart from the apparatus configuration and the processing procedure defined in the embodiment.

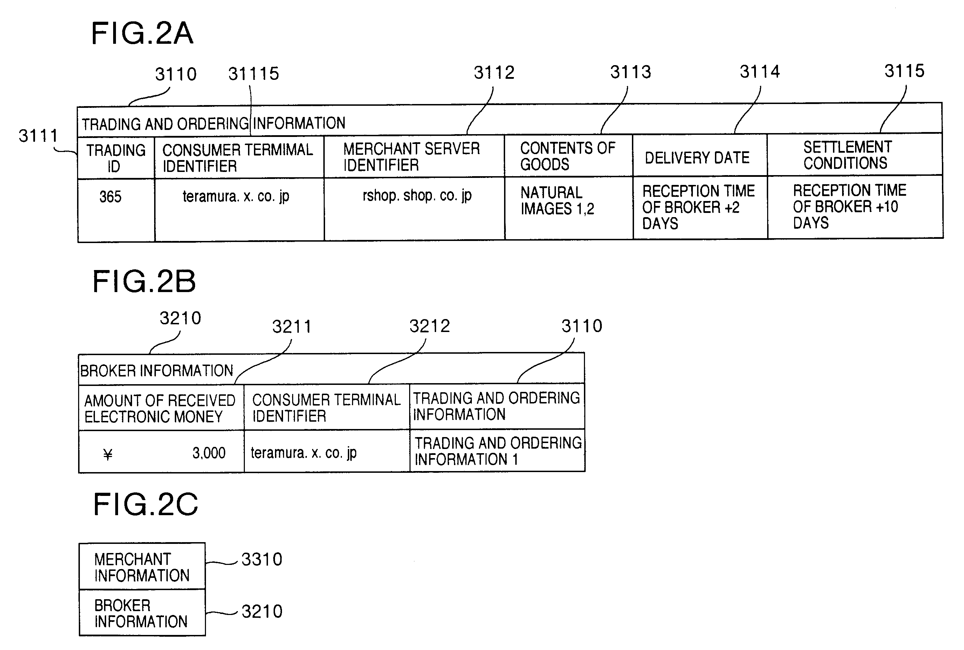

Figs. 2A to 2C show structures of data used in the information processing apparatuses.

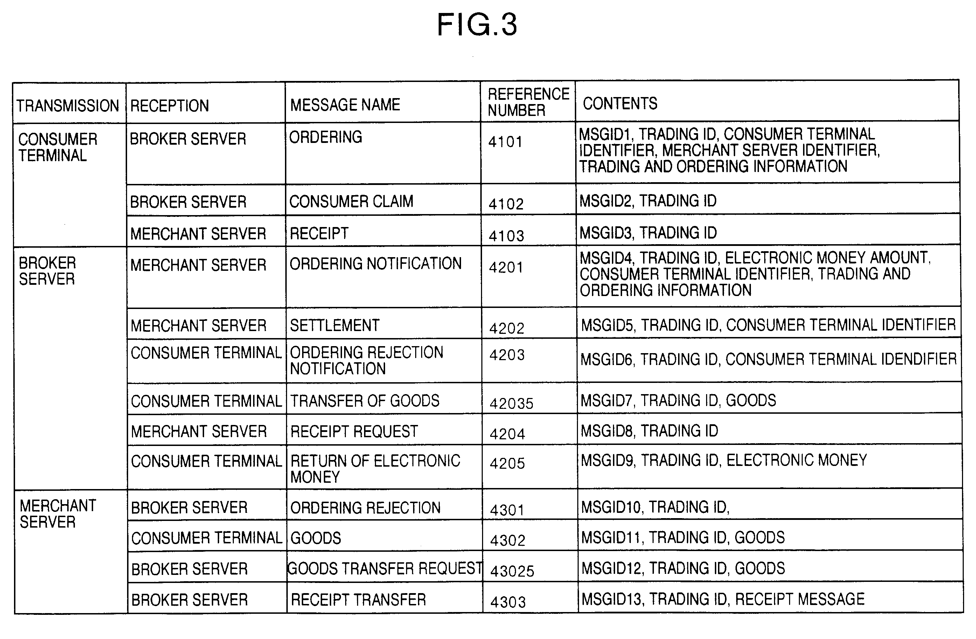

Fig. 3 shows a list of communication messages transmitted and received between the information processing apparatuses.

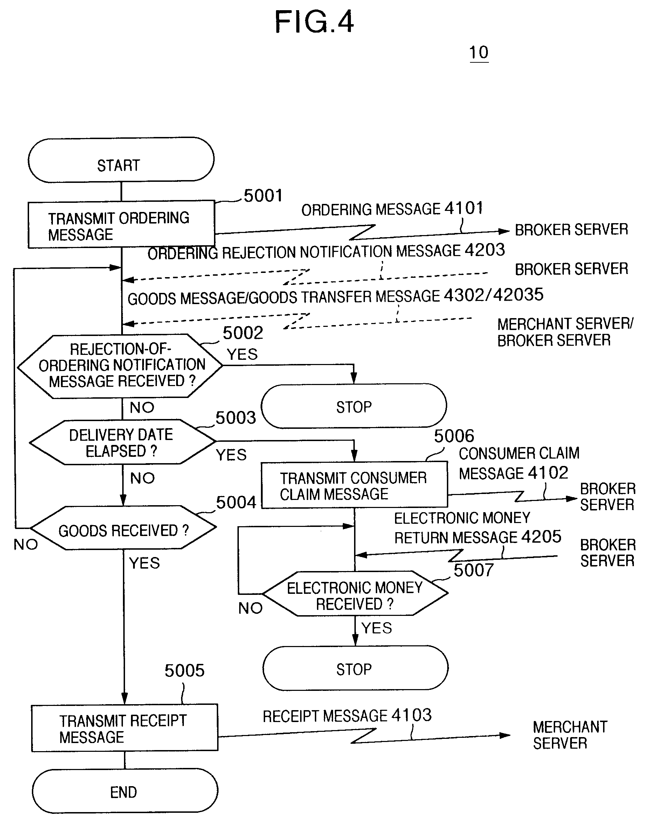

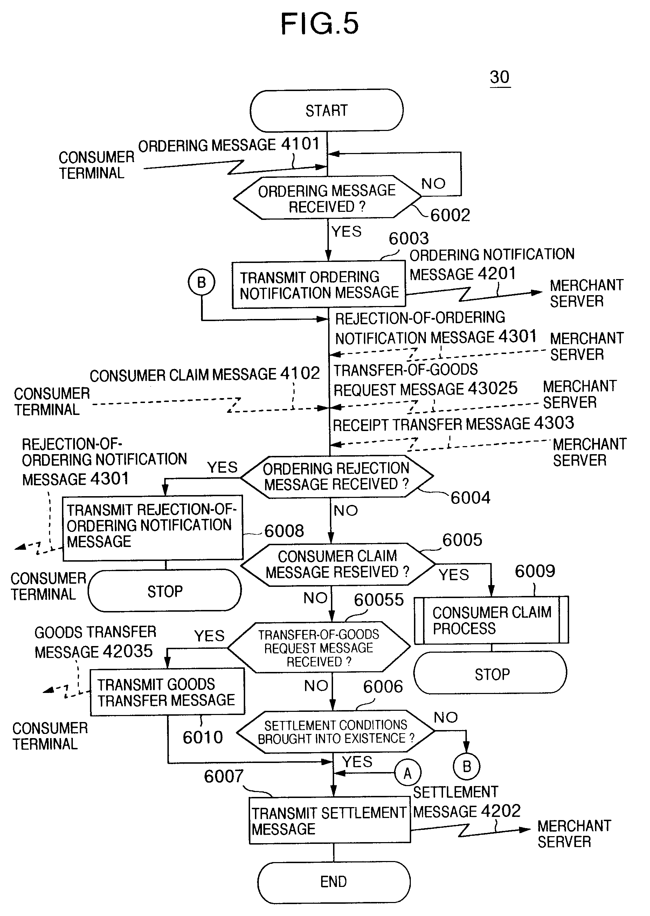

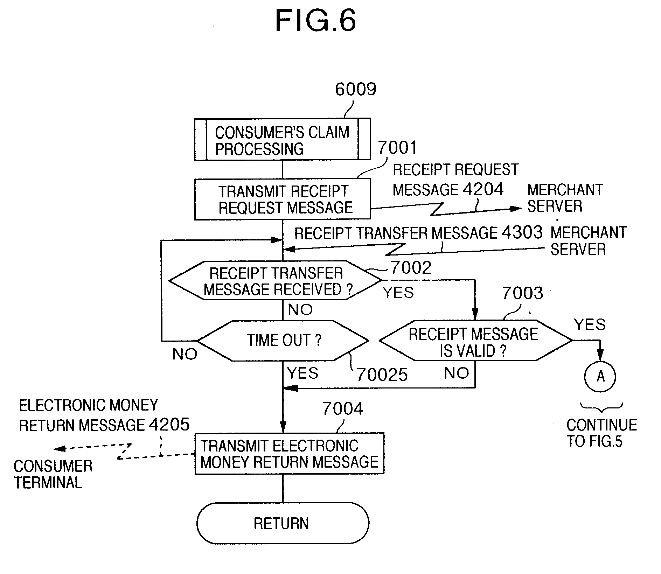

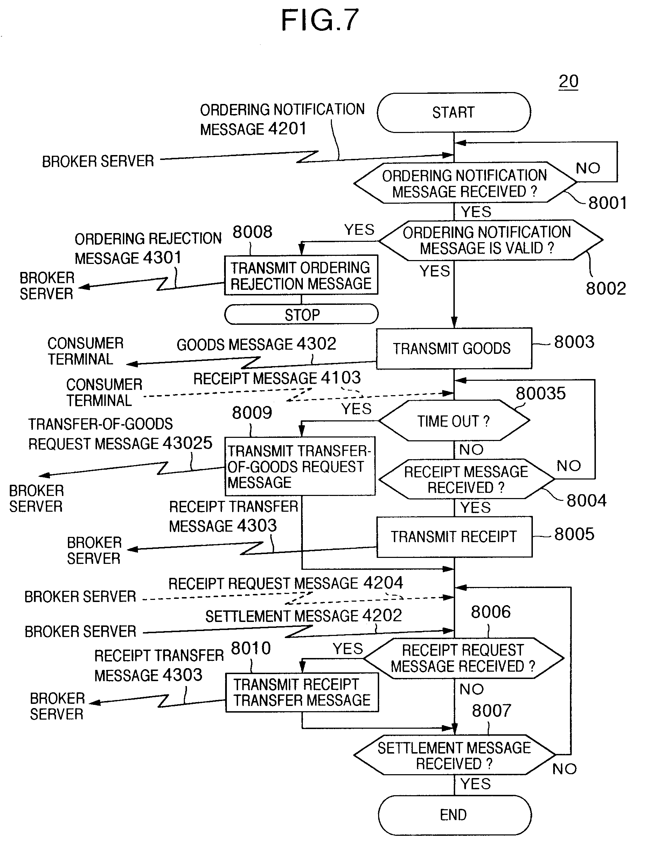

Fig. 4 is a flow chart showing a processing procedure in the consumer terminal 10 definitely. Fig. 6 is a flow chart showing a procedure of a consumer claim processing 6009 in detail. Figs. 5 and 7 are flow chart showing processing procedures in the broker server 30 and the merchant server 20 definitely, respectively.

### 〈Description of Configuration of the Information Processing Apparatus〉

Referring now to Fig. 1, the configuration of the information processing apparatuses is described.

The consumer terminal 10, the merchant server 20 and the broker server 30 have the same configuration basically and each include a communication processing unit (1101, 1201, 1301) connected to a communication network for transmitting and receiving data from other information processing apparatuses, a valuable data (electronic money) processing unit (1105, 1205, 1305) for inputting and outputting data through a display unit and an input unit to a user and controlling input, preservation and output of electronic money, a memory unit (1104, 1204, 1304) and a timer unit (1106, 1206, 1306). The timer unit preserves time data and the time data is increased at a constant rate with an elapse of time.

The valuable data (electronic money) processing unit 1205 of the merchant server 20 can be omitted depending on an embodiment. Detailed description will be made later.

### 〈General Description of Communication Processing Flow〉

The processing flow in the case where data is transmitted and received between the information processing apparatuses through the communication network is as follows. First of all, the information processing apparatus on the transmission side loads transmission data and an address of the information processing apparatus on the reception side from the memory unit to the communication processing unit. Then, the communication processing unit transmits the transmission data to the information processing apparatus on the reception side designated by the address. The communication processing unit of the information processing apparatus on the reception side receives the data and stores the data in the memory unit. It is desirable that the cryptography is utilized to transmit and receive data so that confidence of data, prevention of modification of data and authentication of a communication party are made. The technique of confidence, prevention of modification and authentication of data is described in, for example, Kazuo Ohta, Kaoru Kurosawa and Osamu Watanabe, "Science of Information Security", Kodansha Blue Books, 1995, pp. 104-113, 144-153.

### 〈Description of Contents of Data〉

Referring now to Figs. 2A to 2C, contents of data preserved in the information processing apparatuses are described.

### 〈Description of Trading and Ordering Information 3110〉

The trading and ordering information 3110 is composed of a plurality of data items described below and is preserved in the memory unit 1104 of the consumer terminal 10. The contents of the data items are now described with reference to Fig. 2A.

The trading ID 3111 is an identifier for specifying trading uniquely on the communication network. The trading ID consists of, for example, a combination of a number assigned to the consumer terminal 10 uniquely and an identifier of the consumer terminal 10. A consumer terminal identifier 31115 is an identifier for specifying the consumer terminal uniquely on the communication network. A merchant server identifier 3112 is an identifier for specifying the merchant server uniquely on the communication network. Contents of goods 3113 are ordering contents of goods. Names, types and number of goods are described in this item 3113. A delivery date 3114 is a term on which the consumer terminal 10 receives goods. Settlement conditions 3115 are conditions required when the broker server 30 performs settlement. That is, when the settlement condition is brought into existence, the broker server 30 performs settlement. There are two kinds of settlement conditions including a condition relative to reception of data and a condition relative to a term The former includes reception of a receipt of goods and the latter includes a fixed term, a periodic term (20-th day of every month or the like) and a predetermined term after the broker server 30 has received electronic money.

### 〈Description of Broker Information 3210〉

The broker information 3210 is composed of a plurality of data items described below and is preserved in the memory unit 1304 of the broker server 30. Contents of the data items are now described with reference to Fig. 2B.

An amount of received electronic money 3211 represents an amount of electronic money transmitted from the consumer terminal 10 to the broker server 30. A consumer terminal identifier 3212 is an identifier for specifying the consumer terminal 10 which has transmitted the electronic money uniquely on the network. Contents of trading and ordering information 3110 are the same as those of Fig. 2A. That is, the trading and ordering information 3110 transmitted from the consumer terminal 10 through the network to the broker server 30 is utilized as it is.

### 〈Description of Merchant Information 3310〉

The merchant information 3310 is preserved in the memory unit 1204 of the merchant server 20. Contents thereof are the same as those of the broker information 3210 transmitted from the broker server 30.

### 〈Contents of Communication Message〉

Referring now to Fig. 3, contents of communication messages transmitted and received between the information processing apparatuses are described. All of the communication messages have two portions including a data portion and an identification portion (MSGIDn) used when the information processing apparatus identifies messages. Respective messages are now described in detail for each of the information processing apparatuses constituting transmission sources.

### 〈Communication Message Transmitted by Consumer Terminal 10〉

An ordering message 4101 is transmitted for the purpose of ordering goods. The data portion of this message includes the trading ID 3111, electronic money, the identifier 31115 of the consumer terminal, the identifier 3112 of the merchant server and the trading and ordering information 3110.

A consumer claim message 4102 is transmitted for the purpose of prohibiting settlement when the consumer terminal 10 does not receive goods although the delivery date 3114 has elapsed. The data portion of this message includes the trading ID 3111. The broker server 30 prohibits the merchant server 20 from performing settlement of trading corresponding to the trading ID 3111.

A receipt message 4103 is transmitted when the consumer terminal 10 receives goods. The data portion of this message includes the trading ID 3111. Further, data conversion for preventing forgery of data by a third party or repudiation of transmission of the person in question is applied to the data portion of this message. Concretely, there is a method of adding an electronic signature applying the public key cryptography (Kazuo Ohta, Kaoru Kurosawa and Osamu Watanabe, "Science of Information Security", Kodansha Blue Books, 1995, pp. 104-113, 144-153). The information processing apparatuses handle the message as a receipt of goods relative to the trading ID 3111.

### 〈Communication Message Transmitted by the Broker Server 30〉

An ordering notification message 4201 is transmitted to the merchant server 20 in order to notify that goods are ordered and electronic money is transmitted from the consumer terminal 10. The data portion of this message includes the trading ID 3111, an amount of electronic money received by the broker server 30 with respect to the trading, the identifier of the consumer terminal and the trading and ordering information 3110.

A settlement message 4202 is transmitted to the merchant server 20 in order to complete settlement. The data portion of this message includes the trading ID 3111 and an amount of electronic money received by the broker server 30 with respect to the trading.

A rejection-of-ordering notification message 4203 is transmitted in order to notify the rejection of ordering to the consumer terminal 10 and return electronic money to the consumer terminal 10 when the merchant server 20 rejects ordering of goods. The data portion of this message includes the trading ID 3111 and an amount of electronic money received by the broker server with respect to the trading.

A goods transfer message 42035 is used in order to transfer (transmit) goods which the broker server 30 receives from the merchant server 20 to the consumer terminal 10. This message is transmitted to the consumer terminal 10 when the broker server 30 receives a transfer-of-goods request message 43025 (described later) from the merchant server 20.

A receipt request message 4204 is transmitted in order to request the merchant server 20 to transmit a receipt. The data portion of this message includes the trading ID 3111.

An electronic money return message 4205 is transmitted in order to return electronic money to the consumer terminal 10 when the merchant server 20 does not transmit goods to the consumer terminal 10. The data portion of this message includes the trading ID 3111 and an amount of electronic money received by the broker server 30 with respect to the trading.

### 〈Communication Message Transmitted by the Merchant server 20〉

An ordering rejection message 4301 is transmitted in order that the merchant server 20 rejects ordering of goods. The data portion of this message includes the trading ID 3111.

A goods message 4302 is transmitted in order to transmit goods to the consumer terminal 10. The data portion of this message includes the trading ID 3111 and electronic goods. The transfer-of-goods request message 43025 is transmitted by the merchant server 20 when transfer of goods to the consumer terminal 10 is requested to the broker server. The data portion of this message includes the trading ID 3111 and goods. In the embodiment, the merchant server 20 transmits goods to the consumer terminal 10, although when the merchant server cannot receive the receipt message 4103 from the consumer terminal 10, the transfer-of-goods request message 43025 is transmitted.

A receipt transfer message 4303 is transmitted in order to transfer a receipt to the broker server 30. The data portion of this message includes the receipt message 4103 received from the consumer terminal 10.

### 〈Description of Processing in Information Processing Apparatuses〉

Referring now to flow charts shown in Figs. 4, 5, 6 and 7, processing operation of the information processing apparatuses is described in detail. In Figures, communication messages represented by broken line are not necessarily transmitted. The consumer terminal 10, the broker server 30 and the merchant server 20 are described in order of description.

### 〈Description of Processing in Consumer Terminal 10〉

A processing flow in the consumer terminal 10 is shown in Fig. 4. Processing is performed with reference to the trading and ordering information 3110 shown in Fig. 2A in the following description.

First of all, the consumer terminal 10 prepares the ordering message 4101 on the basis of a purchase request of goods and transmits the request to the broker server 30 through the communication network (step 5001). This process corresponds to an ordering process of goods in the general commercial trading.

The consumer terminal 10 then determines whether the consumer terminal receives the rejection-of-ordering notification message 4203 from the broker server 30 or not (step 5002). When the consumer terminal receives the rejection-of-ordering notification message 4203, the consumer terminal 10 stops processing. That is, the trading is stopped.

When the rejection-of-ordering notification message 4203 is not received, the consumer terminal determines on the basis of time data from the timer unit 1106 whether the delivery date 3114 elapses or not (step 5003). When the delivery date has elapsed, step 5006 is executed.

When the delivery date does not elapse, it is determined whether goods are received or not (step 5004). More particularly, it is determined whether any of the goods message 4302 or the goods transfer message 42035 is received or not. When the message is not received, the step 5002 and the subsequent steps are repeated. When the message is received, step 5005 is executed.

When any of the goods message 4302 or the goods transfer message 42035 is received, the receipt message 4103 is transmitted to the merchant server 20 designated by the merchant server identifier 3112 (step 5005). Then, the consumer terminal 10 finishes processing.

In step 5003, when the elapse of the delivery date 3114 is confirmed, the consumer claim message 4102 is transmitted to the broker server 30 (step 5006). This message is issued to thereby request the broker server 30 to prohibit the settlement of electronic money transmitted as the price of goods.

Then, the consumer terminal waits for reception of the electronic money return message 4205 from the broker server 30 (step 5007). After the electronic money return message 4205 is received, the consumer terminal 10 stops processing.

### 〈Description of Processing in Broker Server 30〉

The processing flow in the broker server 30 is now described with reference to Fig. 5.

First of all, the broker server 30 waits for reception of the ordering message 4101 (step 6002).

When the ordering message 4101 is received, the broker server 30 prepares the broker information 3210 and the ordering notification message 4201 on the basis of the received ordering message (step 6003). The broker information 3210 is stored in the memory 1304 and the ordering notification message 4201 is transmitted to the merchant server 20.

The broker sever 30 determines whether the ordering rejection message 4301 is received or not (step 6004).

When the ordering rejection message 4301 is not received, the broker server 30 determines whether the consumer claim message 4102 is received or not (step 6005).

When the consumer claim message 4102 is not received, the broker server 30 determines whether the transfer-of-goods request message 43025 is received or not (step 60055).

When the transfer-of-goods request message is not received, the broker server determines whether the settlement condition 3115 is brought into existence or not (step 6006).

When the settlement condition is brought into existence, the broker server 30 transmits the settlement message 4202 to the merchant server 20 (step 6007). The broker server 30 then finishes processing.

In step 6004, when the ordering rejection message 4301 is received, the rejection-of-ordering notification message 4301 is transmitted to the consumer terminal 10 (step 6008). The rejection-of-ordering notification message 4301 includes the same amount of electronic money as the amount of received electronic money 3211 included in the broker information 3210. The consumer terminal 10 which is a destination to which goods are transmitted is specified by the consumer terminal identifier 3212 in the broker information 3210. After execution of step 6008, the broker server 30 stops processing. That is, the trading is stopped.

In step 6005, when the consumer claim message 4102 is received, the consumer claim processing is performed (step 6009). Detailed operation in step 6009 is described later. In step 60055, when the transfer-of-goods request message 43025 is received, the broker server 30 prepares the goods transfer message 42035 on the basis of the transfer-of-goods request message 43025 and transmits the message 42035 to the consumer terminal 10 (step 6010). Then, the broker server transmits the settlement message 4202 (step 6007).

The consumer claim processing 6009 is now described in detail with reference to Fig. 6.

The receipt request message 4204 is transmitted to the merchant server 20 (step 7001). The merchant server 20 is specified by the merchant server identifier 3112 in the broker information 3210.

Then, reception of the receipt transfer message 4303 from the merchant server 20 is waited (step 7002). When the message is received, step 7003 is executed. When the message is not received, step 70025 is executed.

When the elapsed time in the waiting state for the reception exceeds a predetermined threshold, it is determined to be the time-out and step 7004 is executed (step 70025). When the elapsed time does not exceed the threshold, the processing after step 7002 is repeated. The threshold is previously stored in the memory 1304 of the broker server 30.

In step 7002, when the receipt transfer message 4303 is received, the validation of the receipt message 4103 in the receipt transfer message 4303 is determined (step 7003). For example, when the electronic signature is added to the receipt message 4103, the validation of the electronic signature is verified. As a method of the verification, there is known an example in which the public key cryptographic system described in, for example, Kazuo Ohta, Kaoru Kurosawa and Osamu Watanabe, "Science of Information Security", Kodansha Blue Books, 1995, pp. 104-113, 144-153 is applied.

In determination step 7003, when the receipt message is justifiable, the settlement processing is executed (step 6007). When the receipt message is not just, the electronic money return processing (step 7004) to the consumer terminal 10 is executed.

In reception of the receipt from the merchant server 20, when the receipt is not just or when the time out occurs, the electronic money return message 4205 is transmitted to the consumer terminal 10 to thereby return electronic money to the consumer terminal 10 (step 7004). Thereafter, the broker server 30 stops processing. That is, when the merchant cannot offer the evidence (receipt) that goods are exactly transmitted to the consumer, electronic money which is temporarily received as the price of goods is returned to the consumer and the trading is stopped. When the just receipt is offered, the settlement is performed.

### 〈Description of Processing in Merchant server 20〉

The processing flow in the merchant server 20 is now described with reference to Fig. 7.

The merchant server 20 waits for reception of the ordering notification message 4201 transmitted by the broker server 30 (step 8001).

When the merchant server 20 receives the ordering notification message 4201, the merchant server 20 determines whether the amount 3211 of received electronic money in the ordering notification message 4201 is equal to the total price of goods or not (step 8002). For example, there is a determination method in which a data base for goods is preserved in the memory 1204 of the merchant server 20 and contents (price of goods) in the data base for goods and the price of the amount of received electronic money are compared with each other. When the amount is not equal to the total price of goods, the ordering rejection message 4301 is transmitted to the broker server 30 (step 8008). That is, the consumer terminal 10 is regarded to transmit the price for goods (electronic money) of an unjust amount of money and the merchant server 20 requests the broker server 30 to stop the trading.

When it is determined that the ordering notification message 4201 is valid, the merchant server 20 transmits the goods message 4302 to the consumer terminal 10 (step 8003). When the elapsed time after transmission of the goods message 4302 exceeds a predetermined threshold, it is determined that the time out occurs and the transfer-of-goods request processing (step 8009) is executed (step 80035). When the elapsed time does not exceed the threshold, the reception determination processing (step 8004) of the receipt message 4103 is executed.

In step 80035, when it is determined that the time out occurs, the transfer-of-goods request message 43025 is transmitted to the broker server 30 (step 8009). This message is to request the broker server 30 to transfer data of goods. When the broker server 30 receives this message, the data of goods in the message is taken out to be transmitted to the consumer terminal 10.

In step 8004, it is determined whether the receipt message 4103 is received or not. When the receipt message is received, step 8005 is executed. When the receipt message is not received, the step 80035 and the subsequent steps are repeated.

In step 8005, the receipt transfer message 4303 is prepared on the basis of the received receipt message 4103 and is transmitted to the broker server 30. However, it is not necessarily required to transmit the receipt transfer message 4303 except the case where the settlement conditions 3115 which are data items in the merchant information 3310 include reception of the receipt.

The merchant server 20 determines whether the receipt request message 4204 is received or not (step 8006). When the receipt request message 4204 is not received, the settlement message reception determination processing (step 8007) is performed. When the receipt request message 4204 is received, the receipt message transfer processing is performed (step 8010).

It is determined whether the settlement message 4202 is received or not (step 8007). When the settlement message 4202 is received, the merchant server 20 determines that the trading is completed and finishes the processing. When the settlement message 4202 is not received, the step 8006 and the subsequent steps are repeated.

In step 8006, when the receipt request message 4204 is received, the receipt transfer message 4303 is transmitted to the broker server 30 and thereafter the settlement message reception determination processing (step 8007) is performed (step 8010).

As described above, When the consumer terminal 10 does not receive goods, the consumer terminal 10 issues a claim to the broker server 30 and prohibits the settlement to thereby prevent that the merchant obtains the price of goods without sending of goods. Further, the consumer terminal 10 can transmit the price of goods to the broker server 30 before arrival of goods to thereby prevent that the consumer obtains goods without payment of the price of goods. Furthermore, the merchant server 20 can request the broker server 30 to transfer goods to the consumer terminal 10 to thereby prevent that the consumer terminal 10 issues an unjust claim without sending of the receipt although the consumer terminal 10 receives goods.

Various modifications and applications can be made in the present invention without departing from the spirit and scope thereof. For example, valuable data for several cases of trading may be collected to be transferred from the broker server 30 to the merchant server 20. To this end, for example, the valuable data is removed from the settlement message 4202 and is transferred as another process. The valuable data is not limited to be transferred to the merchant server 20 and may be transferred to a fourth information processing apparatus. It is considered that the fourth information processing apparatus includes a server for managing a financial agency, for example.

Further, in the sending order to the broker server 30, it is not necessary to send valuable data in advance of goods. After the merchant sends data of goods to the broker server, the consumer may send valuable data to the broker server.

The program for performing the processing shown in Fig. 4 is stored in the memory unit 1104 of the consumer terminal 10, while the program can be stored in a portable memory medium such as an optical disk or a floppy disk and can be transferred to the memory unit 1104 to be executed. The same thing is applied to the processing shown in Figs. 5, 6 and 7.

As described above, according to the present invention, there is provided the broker server and the valuable data transmitted from the goods consumer to the goods merchant is held in the broker server temporarily. When the settlement condition is brought into existence, the valuable data can be transmitted to the goods merchant to thereby prevent unjust obtainment of the price or goods in the electronic trading.

## Claims

1. An electronic trading method in an electronic trading system in which a plurality of information processing apparatuses (10, 20, 30) including means for storing valuable data having the value of money are connected to one another through a communication network, wherein
a first information processing apparatus (10) for requiring purchase of goods, comprising:
transmitting at least an identifier of a second information processing apparatus (20) for providing goods, data relative to a predetermined delivery date and valuable data to a third information processing apparatus (30) for mediating the goods and valuable data;
waiting for reception of data of goods from said second information processing apparatus (20);
transmitting receipt data of the goods to said second information processing apparatus (20) when the data of goods is received; and
transmitting to said third information processing apparatus (30) a command for prohibiting settlement when the data of goods is not received although the delivery date elapses.

2. An electronic trading method in an electronic trading system in which a plurality of information processing apparatuses (10, 20, 30) including means for storing valuable data having the value of money are connected to one another through a communication network, wherein
a third information processing apparatus (30) for mediating goods and valuable data, comprising:
receiving at least an identifier of a second information processing apparatus (20) for providing goods, data relative to a predetermined delivery date and valuable data from a first information processing apparatus (10) for requiring purchase of goods;
transmitting at least an amount of said valuable data, an identifier of said first information processing apparatus (10) and the data relative to the delivery date to said second information processing apparatus (20);
performing settlement relative to said valuable data when a predetermined settlement condition is brought into existence; and
prohibiting said settlement when a command for prohibiting the settlement is received from said first information processing apparatus (10) before said settlement condition is brought into existence.

3. An electronic trading method in an electronic trading system in which a plurality of information processing apparatuses (10, 20, 30) including means for storing valuable data having the value of money are connected to one another through a communication network, wherein
a second information processing apparatus (20) for providing goods, comprising:
receiving at least an identifier of a first information processing apparatus (10) for requiring purchase of goods, data relative to a predetermined delivery date and an amount of the valuable data from a third information processing apparatus (30) for mediating goods and valuable data;
transmitting data of goods to said first information processing apparatus (10); and
receiving receipt data of the goods from said first information processing apparatus (10).

4. An electronic trading method according to Claim 3, wherein
after the receipt data of goods is received from said first information processing apparatus (10), predetermined valuable data is received from said third information processing apparatus (30).

5. An electronic trading method in an electronic trading system in which a plurality of information processing apparatuses (10, 20, 30) including means for storing valuable data having the value of money are connected to one another through a communication network, wherein
a first information processing apparatus (10) for requiring purchase of goods, comprising:
transmitting at least an identifier of a second information processing apparatus (20) for providing goods, data relative to a predetermined delivery date and valuable data to a third information processing apparatus (30) for mediating the goods and valuable data; and
waiting for reception of data of goods corresponding to said valuable data from said third information processing apparatus (30).

6. An electronic trading method in an electronic trading system in which a plurality of information processing apparatuses (10, 20, 30) including means for storing valuable data having the value of money are connected to one another through a communication network, wherein
a third information processing apparatus (30) for mediating goods and valuable data, comprising:
receiving at least an identifier of a second information processing apparatus (20) for providing goods, data relative to a predetermined delivery date and valuable data from a first information processing apparatus (10) for requiring purchase of goods;
transmitting at least an amount of said valuable data, an identifier of said first information processing apparatus (10) and the data relative to the delivery date to said second information processing apparatus (20);
receiving data of goods from said second information processing apparatus (20);
transmitting the data of goods to said first information processing apparatus (10); and
then performing settlement relative to valuable data.

7. An electronic trading method in an electronic trading system in which a plurality of information processing apparatuses (10, 20, 30) including means for storing valuable data having the value of money are connected to one another through a communication network, wherein
a second information processing apparatus (20) for providing goods, comprising:
receiving at least an identifier of a first information processing apparatus (10) for requiring purchase of goods, an amount of the valuable data and data relative to a predetermined delivery date from a third information processing apparatus (30) for mediating goods and valuable data; and
transmitting data of goods to said first information processing apparatus (10).

8. An electronic trading method according to Claim 7, wherein
after the data of goods is transmitted to said third information processing apparatus (30), predetermined valuable data is received from said third information processing apparatus (30).

9. An electronic trading method according to any of Claims 1 to 8, wherein
the valuable data is transmitted from said third information processing apparatus (30) to the second information processing apparatus (20) to perform settlement.

10. An electronic trading method according to any of Claims 1 to 8, wherein
the valuable data is transmitted from said third information processing apparatus (30) to a fourth information processing apparatus to perform settlement.

11. An electronic trading apparatus according to Claim 2, wherein
settlement conditions contain a condition relative to reception of settlement allowable information transmitted by said first information processing apparatus (10).

12. An electronic trading apparatus according to Claim 2, wherein
settlement conditions contain a condition relative to elapse of a specific date.

13. An electronic trading method in an electronic trading system in which a first processing apparatus (10) for purchasing goods, a second processing apparatus (20) for providing goods and a third processing apparatus (30) for mediating goods and valuable data having the value of money are connected to one another through a network, comprising the steps of:
transmitting ordering information of the goods and the valuable data from said first processing apparatus (10) to said third processing apparatus (30);
transmitting said ordering information from said third processing apparatus (30) to said second processing apparatus (20);
transmitting the goods from said second processing apparatus (20) to said first processing apparatus (10) on the basis of said ordering information; and
transmitting said valuable data from said third processing apparatus (30) to said second processing apparatus (20) on the basis of receipt data of the goods from said first processing apparatus (10) to perform settlement.

14. An electronic trading method in an electronic trading system in which a first processing apparatus (10) for purchasing goods, a second processing apparatus (20) for providing goods and a third processing apparatus (30) for mediating goods and valuable data having the value of money are connected to one another through a network, comprising the steps of:
transmitting ordering information of the goods and the valuable data from said first processing apparatus (10) to said third processing apparatus (30);
transmitting said ordering information from said third processing apparatus (30) to said second processing apparatus (20);
transmitting the goods from said second processing apparatus (20) to said first processing apparatus (10) on the basis of said ordering information; and
transmitting the valuable data from said third processing apparatus (30) to said second processing apparatus (20) to stop settlement when receipt data of the goods from said first processing apparatus (10) cannot be received until a predetermined date.
